# EUROPEAN PATENT SPECIFICATION

(11) **EP 3 607 008 B1**
(45) Date of publication and mention of the grant of the patent: **04.06.2025**
(21) Application number: 18718873.5
(22) Date of filing: 03.04.2018
(51) Int. Cl.: C09D 5/00, C09D 7/40, C09D 11/037, C04B 14/28, C04B 20/00, C08K 3/26

(54) **METHOD OF IMPROVING STAIN RESISTANCE OF SURFACES**
VERWENDUNG VON POLYCARBONAT ZUR HERSTELLUNG VON HOHLEN BEHÄLTERN
UTILISATION DE POLYCARBONATE POUR LA FABRICATION DE RÉCIPIENTS CREUX

(30) Priority: 02.04.2017 FI 20175305
(43) Date of publication of application: 12.02.2020
(73) Proprietor: FP-Pigments Oy, 02170 Espoo (FI)
(72) Inventor: HAAKANA, Sami, 02170 Espoo (FI); VIITANEN, Jorma, 02170 Espoo (FI)
(74) Representative: Laine IP Oy
(86) International application number: PCT/FI2018/050241
(87) International publication number: WO 2018/185371

(56) References cited:
- EP-A1- 2 248 841
- WO-A1-03/004414
- WO-A1-2006/134080
- WO-A1-2011/116971
- WO-A1-2016/174309
- WO-A1-97/32934
- WANG ET AL.: "Adsorption of bisphenol A onto cationic modified zeolite", 3 September 2015 (2015-09-03), XP002781694, Retrieved from the Internet <URL:https://pdfs.semanticscholar.org/904b/7d618371f34e56924a2be489824a8dc576a1.pdf> [retrieved on 20180606]
- IN HAK BAICK ET AL: "UltraHigh Molecular Weight Nonlinear Polycarbonates Synthesized in Microlayers", INDUSTRIAL & ENGINEERING CHEMISTRY RESEARCH, vol. 52, no. 49, 11 December 2013 (2013-12-11), pages 17419 - 17431, XP055481744, ISSN: 0888-5885, DOI: 10.1021/ie4029544
- WU W S ET AL: "The effect of precipitated calcium carbonate nanoparticles in coatings", JOURNAL OF COATINGS TECHNOLOGY AND RESEARCH, SPRINGER NEW YORK LLC, US, vol. 13, no. 2, 13 October 2015 (2015-10-13), pages 277 - 286, XP035950969, ISSN: 1547-0091, [retrieved on 20151013], DOI: 10.1007/S11998-015-9740-X

## Description

### FIELD

The present invention relates to surfaces having improved stain resistance. In particular, the present invention concerns a method of improving stain resistance of surfaces formed by binders and fillers. The present invention also concerns film forming compositions having improved stain resistance.

### BACKGROUND

Materials with porous surfaces readily take up fluids that may leave stains thereon. Such materials are, for example, concrete, grout and ceramics, as well as paint films and other porous surfaces formed by materials comprising binders and fillers.

To protect surfaces against water- and oil-based stains, various stain resistance chemicals are currently being used. Such chemicals typically contain silicon or fluorinated compounds. Examples of conventional agents include fluorinated polyurethane dispersions and fluoroalkylsilanes which aim at forming an impervious film on the surface.

Surface treatment chemicals fail to provide a permanent protection of the material, in particular if the surface is exposed to water in the form of rain, drizzle, fog and similar outdoor conditions, which rinses off the surface protection. Already for that reason, surface treatments using stain resistance chemicals need to be frequently renewed to ensure proper protection.

Furthermore, in many cases, it is undesirable to cover the surface with a uniform film, because such a film will impair breathability and trap water and humidity inside the material. This may give cause to microbial growth, such as moulding, on and inside the material.

Documents Wu et al. "The effect of precipitated calcium carbonate nanoparticles in coatings", J. Coat. Technol. Res., 13 (2) 277-286, 2016, WO2016/174309 A1 and WO97/32934 represent prior art. In particular, WO2016/174309 A1 discloses a composition having improved barrier properties, comprising talc platy particles, which are dispersed using high shear forces into an aqueous dispersion of 30-60nm PCC particles, for example in an amount of 12.5wt% of the dry matter, whereby the talc platy particles become separated from each other.

There is a need for achieving prolonged protection of surfaces formed by materials comprising binders and fillers.

### SUMMARY OF THE INVENTION

It is an aim of the invention to remove at least a part of the problems relating to the known technical solutions and to provide a method of increasing stain resistance of a porous surface formed by a binder and filler particles.

It is another aim of the invention to provide a novel film-forming composition comprising a binder and mineral fillers.

Further, it is still a further aim of the invention to provide stain resistant surfaces formed by mineral fillers held together with binders.

The present invention is based on the idea of providing an additive based on ultrafine precipitated calcium carbonate and incorporating that material into conventional film- or layer-forming compositions comprising binders and mineral fillers. In particular, the present invention provides an additive constituted by particles of precipitated calcium carbonate having an average particle size in the range of 30 to 60 nm. Preferably, the particles are provided in the form of a composition having a narrow particle size distribution.

Surprisingly it has been found that precipitated calcium carbonate particles of the indicated size range efficiently fill the voids or pores between larger mineral filler particles having a size of about 1 to 15 micrometers so that at loadings of about 0.1 to 7.5 % by weight of the finely divided material a dense and smooth surface is obtained which is stain resistant. It would appear that the uptake of water and oil of such a surface is reduced compared with a surface which does not contain such particles, although this is merely a suggestion and not limiting of the invention.

The invention also provides compositions of binders and mineral fillers, such as paint, grout and concrete, containing 0.1 to 7.5 % of precipitated calcium carbonate particles of 30 to 60 nm.

Finally, the present invention also provides stain resistant surfaces.

More specifically, the method according to the invention is mainly characterized by what is stated in claim 1.

The compositions according to the invention are mainly characterized by what is stated in claims 11 and 15, and the surfaces according to the invention by what is stated in claim 16.

Considerable advantages are obtained by the invention. Not only does the calcium carbonate of the present kind improve stain resistance without the use of fluorinated compounds, silicon compounds or other external treatment chemicals, but it also improves optical properties of the mineral layers, such as opacity. The surfaces also become more dense and harder as a result of the modification.

In contrast to conventional stain resistant increasing agents, the present particles act inherently to give an effect which will not be reduced by rain or other weather conditions. For this reason, no renewal of treatment is needed.

Next embodiments will be examined in more detail with reference to the attached drawings.

### BRIEF DESCRIPTION OF THE DRAWINGS

Figure 1 is an SEM image showing in cross-section the structure of a reference coating;
Figure 2 is an SEM image showing in cross-section the surface structure of a coating according to an embodiment according to the present invention;
Figure 3 is an SEM image showing the surface of the Reference coating of Figure 1; and
Figure 4 is an SEM image showing the surface of the embodiment of Figure 2.

### EMBODIMENTS

### Definitions

In the present context, the term "pigment volume concentration", abbreviated PVC, stands for the amount pigment in a coating compared to amount of binder. In general, as the PVC increases the gloss and durability of the coating decreases. Also, the porosity of the surface increases that leads to a decrease in stain resistance.

"Critical PVC" designates the point (numerical value of the PVC) at which the binder of the coating loses its ability to bind with the particles in the coating.

"Stain" typically stands for a discoloration of the surface of the material which, for example, can be seen, i.e. determined or assessed visually.

"Stain resistance" stands for the ability of the surface to become stained (i.e. to pick up, for example, by chemical or physical interaction discolouring substances which leave stains on the surface).

As briefly discussed above, provided are methods of increasing stain resistance of a surface of a material layer formed by a binder and filler particles, in particular mineral filler particles. The binders are formed by polymeric compounds that, for example, may crosslink during drying to give a polymeric network which stiffens the compositions and bonds the filler particles together. The binders may also be based on hydraulic binder materials which harden due to a chemical reaction.

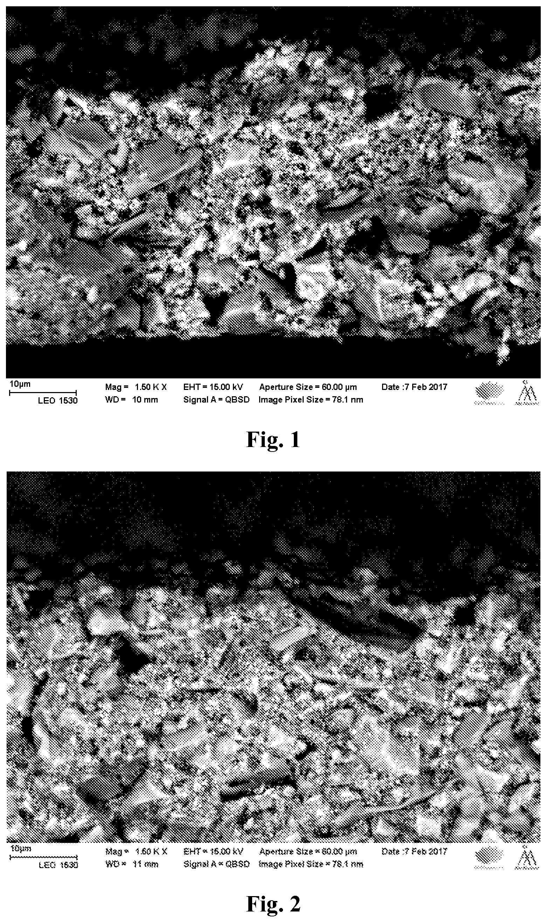

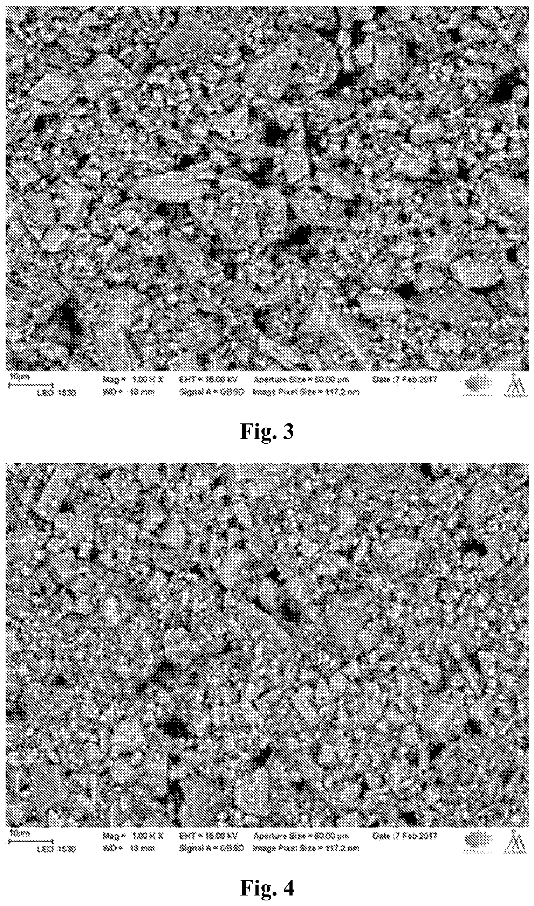

Irrespective of the mechanism, the surfaces of the materials will be porous (Figures 1 and 3). There are several reasons: First, the particles used typically have a size in the range of about 1 to 50 µm, in particular about 1 to 15 µm, in paints. In grout and concrete, the ballast has even much larger particle sizes. As a result, there will always be some voids and spaces about the filler particles and between filler particles. Second, when the proportion of fillers to binder increases, i.e. when the PVC-value increases, there will be more and more voids and spaces around the filler particles, giving rise to porosity in the surfaces of articles and layers formed from the hardening materials. Third, a further source of porosity is the air content present. This is partly due to the mixing operation needed to evenly distribute the mineral fillers inside the binder phase, optionally when working in a liquid, such as water or a solvent. Typically, the amount of air in grout and cement can be up to 1 to 10 % by volume. For paints, the concentration of air is somewhat smaller, but still not insignificant.

For the sake of order it should be noted that the above explanations are provided for illustrative purposes only, and the present invention is not to be understood to be limited to any of them.

In one embodiment, there will be a plurality of voids or spaces having a size at least roughly corresponding to the sizes of the mineral fillers in the surface layers. By incorporating into the film- or surface-forming compositions, before the compositions are formed into a layer or hardened, or both, particles of precipitated calcium carbonate having a particle size in the range of 30 to 60 nm, the voids or spaces between and about the mineral fillers can be filled at least partially so as to achieve a smooth, and as it appears hard and non-absorbent surface (Figures 2 and 4). To that end, the amount of such precipitated calcium carbonate, also referred to as ultrafine precipitated calcium carbonate (in the following "UFPCC"), is sufficient to fill at least a portion of the spaces between the filler particles of the surface. In one embodiment, ultrafine precipitated calcium carbonate particles are incorporated in an amount sufficient to fill at least 10 %, in particular 20 to 90 %, for example 25 to 80 %, by volume of the spaces between the filler particles.

In one embodiment, ultrafine precipitated calcium carbonate particles are incorporated in amounts of 0.5 to 10 %, for example 0.75 to 7.5 %, in particular 1 to 7 %, such as 2 to 6 %, by weight of the dry matter of the composition. Thus, at loadings which are only up to 20 % at the most, of the weight of the mineral fillers, the present small UFPCC particles will smoothen out the surfaces of the material layers and improve surface properties significantly.

In one embodiment, the paint composition contains filler particles at a concentration exceeding the critical pigment volume concentration. In particular the concentration of filler particles exceeds the critical pigment volume concentration with at least 5 %, in particular at least 10 %.

In one embodiment, the composition is a paint composition containing filler particles at a concentration of at least 50 %, in particular at least 60 %, for example more than 70 %, by weight of the dry matter of the composition.

Thus, in some embodiments, ultrafine precipitated calcium carbonate particles having a particle size in the range of 30 to 60 nm are used, preferably on their own (i.e. alone) - in particular not mixed with other components - as additive for coatings (such as paint films), concrete or grout.

Thus, surprisingly, using the present technology, it is possible to work in a range of mineral filler loadings which is higher than conventionally used, but which will not incur the disadvantages known in the art caused by increase fragility, loss of hardness, loss of wet scrub resistance, loss of opacity and gloss or one of them, not to mention loss of stain resistance.

The present compositions can be provided by methods known per se. For example, a paint composition can be obtained by mixing together binder, fillers, optical pigments, paint additives and other components, referred to as "paint adjuvants", and precipitated calcium carbonate particles.

In one embodiment, the mixing comprises combining 10 to 25 parts by weight of a binder, 30 to 70 parts by weight of a filler, 1 to 20 parts by weight of a pigment, optionally 1 to 10 parts by weight of paint additives and adjuvants, and 1 to 10 parts by weight of precipitated calcium carbonate particles having an average particle size of 30 to 60 nm.

For paint compositions, any conventional binder can be used. Examples include natural or synthetic polymers, in particular resins selected from the group of alkyd, acrylic, styrene acrylic, vinyl-acryl, vinyl acetate ethylene resins, polyesters, polyurethanes, epoxy resins, melamine resins, silanes or siloxanes. Generally, water-borne compositions are preferred. Thus, acrylic, styrene-acrylic, vinyl-acryl, vinyl acetate and vinyl acetate ethylene resins are considered particularly advantageous water compatible binders.

In addition to the added UFPCC particles, the paint compositions contain mineral pigments and fillers, such as titanium oxide, talc, ground or precipitated calcium carbonate, kaolin, dolomite, silicate, calcium sulphate and barium sulphate and combinations thereof.

Conventional additives and adjuvents are represented by the following (although the list is by no means exclusive): cellulosic thickener, pH control agents, wetting agents, dispersing agents, defoamers, coalescent agents, mold protection agents, preservatives, hydrophobing agents and rheology modifiers. The concentration of each of them is 0 to about 2 % by weight, but typically they together amount to no more than 10 % by weight, for example about 7.5 % or less.

The composition of one embodiment is a paint composition which contains filler particles
- in a concentration of at least 50 %, in particular at least 60 %, for example more than 70 %, by weight of the dry matter of the composition,
- said concentration of filler particles exceeding the critical pigment volume concentration with at least 5 %, in particular the pigment volume concentration percent is greater than 70 %.

The composition of another embodiment, is a paint composition comprising, calculated from the dry matter of the composition,
- 10 to 25 % by weight of a binder:
- 30 to 70 % by weight of a filler;
- 1 to 20 % by weight of an optical pigment;
- optionally 1 to 10 % by weight of paint additives and adjuvants; and
- 1 to 10 % by weight of precipitated calcium carbonate particles having an average particle size of 30 to 60 nm.

Typically, the previously mentioned optional hydraulic binder is selected from the group of cement, such as Portland cement or rapid cement, fly ash or blast furnace slag or other pozzolonic binder, and gypsum and combinations thereof.

The mineral fillers can be sand and gravel or other mineral, inert components. Typically grout, has a content of fillers having a sieved size smaller than 4 mm, whereas concrete has a content of fillers having a sieved size greater than 4 mm.

To obtain grout, plaster, mortar and cement mixes having good workability, composition is mixed with water to provide a water-to-hydraulic binder ratio greater than 0.4, in particular 0.45 to 0.60. Thus, the composition can be mixed with water to provide a concrete mix or a grout mix having a water to cement ratio greater than 0.35, in particular 0.45 to 0.60.

The porous surfaces of layers formed by the above compositions will be densified by the addition of the present ultrafine precipitated calcium carbonate particles. Densification will be seen in the stain resistance.

Typically, the surface of the layer has a stain resistance ΔL*D65 on the Gilsonite test which is at least 5 % better than that of a corresponding composition having the same weight content of filler but not containing particles of calcium carbonate having a particle size in the range of 30 to 60 nm.

The surface of the layer also has an opacity which is typically about 85 %, in particular better than 88 % and preferably better than 90 %.

Opacity can be expressed in terms of Δ contrast ratio which measures the transparency of the surface. The opacity increases significantly when the pigment volume concentration of the test material increases, approximately 0.5 % per 1 % increase in PVC.

In one embodiment of the above described method, the composition is a paint composition comprising filler particles at a concentration exceeding the critical particle volume concentration, in particular the concentration of filler particles exceeds the critical pigment volume concentration with at least 5 %, in particular at least 10 %, in particular the pigment volume concentration percent is over 70 %.

In a preferred embodiment of a paint composition, the Brookfield viscosity (100 rpm) is 1000-6000 cP, for example 2000-3000 cP.

In the present context, the UFPCC particles are characterized as having a "diameter" of 30 to 60 nm. This is not to be taken as a positive indication that all of the particles are spherical although it is believed that at least a considerable part of them roughly meets the above given definition for spherical particles. Broadly, the term "diameter" designates that the particles have an average size in the indicated range. Typically, the smallest diameter is 20 nm.

Suitable PCC particles can be produced for example as disclosed in WO2014202836. The particle size of the UFPCC particles is given as Sedigraph Particle size. The particle size can also be confirmed as well as assessed and determined from SEM images for example of the pure nano-PCC product.

In one embodiment, the production method comprises the steps of continuously feeding calcium hydroxide as fine drops and/or particles into gas which contains carbon dioxide and which is inside a precipitation reactor, in order to carbonate the calcium hydroxide, i.e. in order to produce precipitated calcium carbonate in the precipitation reactor.

Calcium hydroxide or other suitable Ca⁺⁺ ion sources can be used as a reactive mineral substance, from which calcium carbonate is formed using carbon dioxide. Typically, calcium hydroxide is fed into the precipitation reactor as a sludge of calcium hydroxide, i.e. as calcium hydroxide dispersed in water, such as lime milk, but it can also be fed in as a calcium hydroxide solution. The material is advantageously fed into the reactor through a disintegration and spraying apparatus located in the reactor or in association with it.

In the method, a disintegration and spraying apparatus of the so-called impact mixer type can be employed. In that kind of mixer, very fine drops and/or particles are formed from the calcium hydroxide sludge or solution.

In addition to the calcium hydroxide sludge, a gas containing carbon dioxide which effects precipitation and which may be pure or nearly pure carbon dioxide, or combustion gas, or other suitable gas containing CO₂, is continuously fed into the precipitation reactor.

In order to produce the small particles desired it is advantageous to arrange for precipitation to take place in a lowered reaction temperature, below 65 °C, typically at 10-65 °C, more typically at 30-65 °C, most typically at a temperature below 40 °C.

The dispersion of PCC particles in water will have a dry matter content of about 5 to 55 %, in particular about 28 to 42 %, by weight of the total mass of the dispersion.

In addition to providing, as a starting material for the present process, an aqueous dispersion of PCC particles having an average size of about 30 to 60 nm, it is also possible to provide an aqueous dispersion containing PCC agglomerates, typically having a size of 2 to 40 um, formed by primary PCC particles having an average size in the cited range of 30 to 60 nm. Such agglomerates and aqueous dispersions containing the same are disclosed in WO2014202836.

As mentioned above, embodiments will provide materials having improved stain resistance. In the present context, a stain typically is a discoloration that can be distinguished, for example by visual inspection, from the surface of the material or medium, on which it is found.

Stains can be caused by the interaction of two or more dissimilar materials. In the present case, the stain it typically caused by a material which is dissimilar from the surface formed by a binder and a filler or pigment or both. The stain will attach to such a surface by chemical or physical interactions.

The stains can be hydrophobic or hydrophilic.

Examples of hydrophobic stains include the following (the list is not exhaustive):
- Gilsonite solution (stain test)
- Fats and greases
- The carbon compounds of exhaust gases (for example alkanes)
- Lignin (at least partly hydrophobic)
- Permanent markers
- Blue ball pen
- Pencil
- Crayon
- Lipstick (at least partly hydropobic)
- Nicotine
- Metal compounds in household water

Examples of hydrophilic stains include the following (the list is not exhaustive):
- Coffee
- Soya sauce
- Red wine
- Non permanent markers
- Mustard
- Ketchup

Typically, the stains are caused by the corresponding materials which primarily are hydrophobic or hydrophilic.

Next, non-limiting examples are given for illustrative purposes.

### Examples

Two different dosing levels of UFPCC have been made and results are compared to reference paint.

Tables 1 and 2 presents the measured coating properties that were analyzed from the made paint films. König hardness, water absorption, swelling and water vapor permeability analysis were conducted to the applied paint films. Table 1 shows these analysis results. Stain resistance (Gilsonite test) results are presented in Table 2.

Table 3 shows stain resistance (Gilsonite test) results and change in opacity (Δ contrast ratio) results when changing PVC from 71 % up to 80% with two different dosing levels of UFPCC compared to reference paint.

### Methods

Hardness was measured by the König test.

### Water Vapor Permeability

Staining was assessed using the Gilsonite staining test for evaluating film porosity
In the Gilsonite staining test, the porosity of paint coatings was evaluated by analyzing the absorption of the Gilsonite solution to the coating. For the examples, a Gilsonite solution was prepared mixing together 25 g Gilsonite powder, 202.5 g white spirit and 27.5 g xylene. The paints compared were applied side by side on an application chart at a film thickness of about 100 µm. The Gilsonite solution was applied at the bottom of the application chart, which was placed on a level surface, with a single horizontal brush stroke. After application of the solution it is allowed to absorb to the coating for 15 seconds. After that time, the stained area was rinsed with white spirit and after all loose stain had been rinsed off, the chart was dried.

Gilsonite staining was analyzed by visual evaluation and instrumentally.

### Example 1

Use of discrete ultrafine CaCO₃ as an additive in high PVC masonry paint leads to dense film that absorbs less water and it's harder. Paints' stain resistance is improved and it has also lower water vapor permeability. Observed changes are a function of the UFPCC dose applied: higher UFPCC dosages will lead to a harder or denser film that has better staining resistance.

**Table 1. High PVC masonry paint - surface property results**

| | | unit | REF Paint | with 2,5% UFPCC | with 5% UFPCC |
|---|---|---|---|---|---|
| König Hardness | 1d | s | 27 | 30 | 31 |
| | 14d | s | 30 | 33 | 34 |
| Water absorption | | % | 11 | 7 | 6 |
| Swelling | | % | 4 | 2 | 1 |
| Water Vapor Permeability, ANO R-127 | 1d | g/(m2d) | 625 | 544 | 441 |
| | 2d | g/(m2d) | 571 | 500 | 405 |
| | 3d | g/(m2d) | 564 | 489 | 397 |
| | 4d | g/(m2d) | 562 | 488 | 397 |
| | 7d | g/(m2d) | 539 | 469 | 383 |
| | AVG | g/(m2d) | 572 | 498 | 405 |

**Table 2. Stain resistance (Gilsonite test) results from high PVC masonry paint**

| | **STAINING (L*D65)** | | | |
|---|---|---|---|---|
| | Before | After | Δ | **Improvement** |
| **Reference** | 94.4 | 87.0 | -7.4 | na |
| **2,5 wt% UFPCC** | 94.4 | 91.1 | -3.2 | 4.2 |
| **5,0 wt% UFPCC** | 94.3 | 93.0 | -1.4 | 6.1 |

Ultrafine CaCO₃ is also visually detected from SEM images from the high PCV masonry paint. In this respect, reference is made to the attached SEM images (Figures 1 to 4).

As will appear, UFPCC has created more closed coating surface (compare the surface shown in Figure 4 to the reference surface of Figure 3), and it is also seen from a comparison of Figures 1 and 2 that UFPCC has been distributed evenly through the coating layer.

**Table 3. Stain resistance (Gilsonite test) and opacity (Δ Contrast ratio) results obtained for various PVC masonry paints**

| | **STAINING (L*D65)** | | | | |
|---|---|---|---|---|---|
| | Before | After | Δ | **Staining improvement** | **Δ Contrast ratio** |
| **Reference, PVC 71%** | 93.99 | 89.45 | -4.54 | na | na |
| **5 % UFPCC, PVC 71%** | 93.9 | 91.79 | -2.11 | 2.4 | -0.67% |
| **Reference, PVC 71%** | 93.9 | 88.49 | -5.41 | na | na |
| **5 % UFPCC, PVC 74 %** | 94.04 | 90.09 | -3.95 | 1.5 | 1.37 |
| **Reference, PVC 71%** | 93.95 | 88.84 | -5.11 | na | na |
| **5 % UFPCC, PVC 77 %** | 94.42 | 89.76 | -4.66 | 0.5 | 2.69 |
| **Reference, PVC 71%** | 93.91 | 88.5 | -5.41 | na | na |
| **5 % UFPCC, PVC 80 %** | 94.55 | 89.02 | -5.53 | -0.1 | 5.63 |

Surprisingly, the results of this test show that the porosity was decreased significantly as the stain resistance is increased together with the opacity. The level of porosity stayed the same even though the PVC increased up to 9 % while still increasing the opacity.

### Example 2

Commercial grout was purchased where UFPCC was intentionally added through vigorous mixing. A drawdown was made and staining resistance (Gilsonite test) was conducted. The results are presented in Table 4.

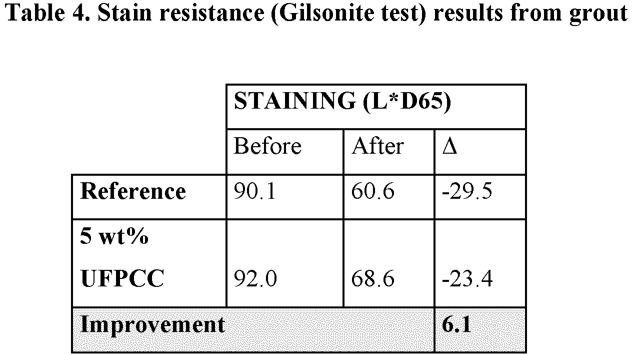

As will appear from the results, UFPCC has improved staining resistance for the commercial grout.

### Example 3

Concrete was made as described in Table 4. Wet concrete was dried into a 15cm cubicle and staining resistance (Gilsonite test) was made to dried concrete surface (Tables 5 and 6).

**Table 5. Concrete recipe**

| | |
|---|---|
| Cement | 350 kg/m^3 |
| Filler | 9% |
| Sand | 50% |
| Crush 6-16mm | 41% |
| Flow aid | 0,7 % |
| water/cement ratio | 0,5 |
| UFPCC dose at trial | 1 % |

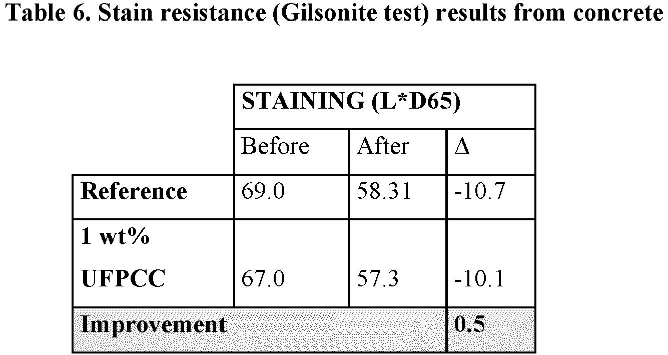

As will appear, an addition of UFPCC at a concentration of 1 % by volume improved staining resistance for the concrete.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

The present additive of ultrafine calcium carbonate can be used for achieving a dense film that absorbs less water and is harder as the structure is less porous. This leads to the film having better stain resistance and lower water vapor permeability.

Paints, concrete, grout and plaster and mortar surfaces are particularly interesting applications.

### ACRONYMS LIST

- PVC: Pigment volume concentration
- UFPCC: Ultra Fine Precipitated Calcium Carbonate
- D65: Standard illuminant
- ΔL*: Difference in luminance

### CITATION LIST

### Patent Literature

WO2014202836

## Claims

1. Method of increasing stain resistance of a surface of a layer formed by a paint composition comprising a binder and filler particles, said filler particles being spaced apart in the layer, wherein particles of precipitated calcium carbonate having a particle size in the range of 30 to 60 nm, as assessed and determined from SEM images, are incorporated into the composition, before the composition is formed into the layer, in a sufficient amount to fill at least a portion of the spaces between the filler particles of the surface, wherein said precipitated calcium carbonate particles are incorporated in an amount of 0.5 to 10 % by weight of the dry matter of the composition.

2. The method according to the claim 1, wherein said precipitated calcium carbonate particles are incorporated in an amount sufficient to fill at least 10 %, in particular 20 to 90 %, for example 25 to 80 %, by volume of the spaces between the filler particles.

3. The method according to the any of the preceding claims, wherein said precipitated calcium carbonate particles are incorporated in an amount of 0.75 to 7.5 %, preferably 1 to 7 %, for example 2 to 6 %, by weight of the dry matter of the composition.

4. The method according to any of the preceding claims, wherein the paint composition contains filler particles at a concentration exceeding the critical pigment volume concentration, in particular the concentration of filler particles exceeds the critical pigment volume concentration with at least 5 %, in particular at least 10 %.

5. The method according to any of the preceding claims, wherein the paint composition contains filler particles at a concentration of at least 50 %, in particular at least 60 %, for example more than 70 %, by weight of the dry matter of the composition, and the filler has an average particle size diameter in the range of 1 to 10 µm.

6. The method according to any of the preceding claims, wherein the paint composition is obtained by mixing together 10 to 25 parts by weight of a binder, 30 to 70 parts by weight of a filler, 1 to 20 parts by weight of a pigment, optionally 1 to 10 parts by weight of paint additives and adjuvants, and 1 to 10 parts by weight of precipitated calcium carbonate particles having an average particle size of 30 to 60 nm.

7. The method according to any of the preceding claims, wherein the binder is a natural or synthetic polymer, in particular a resin selected from the group of alkyd, acrylic, styrene acrylic, vinyl-acryl, vinyl acetate ethylene resins, polyesters, polyurethanes, epoxy resins, melamine resins, silanes or siloxanes.

8. The method according to any of the preceding claims, wherein the the pigment or filler is selected from the group of titanium oxide, talc, ground or precipitated calcium carbonate, kaolin, dolomite, silicate, calcium sulphate and barium sulphate and combinations thereof.

9. The method according to any of the preceding claims, wherein the paint composition contains a cellulosic thickener, a pH control agent, a wetting agent, a dispersing agent, defoamer, a coalescent agent, mold protection agents, preservatives, hydrophobing agents and rheology modifiers.

10. The method according to any of the preceding claims, wherein the surface of the layer has a stain resistance ΔL*D65 on the Gilsonite test which is at least 5 % better than that of a corresponding composition having the same weight content of filler but not containing particles of calcium carbonate having a particle size in the range of 30 to 60 nm.

11. A surface-layer forming paint composition comprising a mixture of a binder and filler particles, said composition being capable of forming a layer with a surface of defined by fillers which are spaced apart, wherein the binder is a resin selected from the group of alkyd, acrylic, styrene acrylic, vinyl-acryl, vinyl acetate ethylene resins, polyesters, polyurethanes, epoxy resins, melamine resins, silanes or siloxanes, and wherein the composition further contains particles of precipitated calcium carbonate, having a particles size in the range of 30 to 60 nm, as assessed and determined from SEM images, in a sufficient amount to fill at least a portion of the spaces between the filler particles of the surface, wherein said precipitated calcium carbonate particles are incorporated in an amount of 0.5 to 10 % by weight of the dry matter of the composition.

12. The composition according to claim 11, comprising said precipitated calcium carbonate particles in an amount of at 0.75 to 7.5 %, preferably 1 to 7 %, for example 2 to 6 %, by weight of the dry matter of the composition.

13. The composition according to claim 11 or 12, wherein the paint composition contains filler particles
- in a concentration of at least 50 %, in particular at least 60 %, for example more than 70 %, by weight of the dry matter of the composition,
- said concentration of filler particles exceeding the critical pigment volume concentration with at least 5 %, in particular the pigment volume concentration percent is greater than 70 %.

14. The composition according to claim 11 to 13, wherein the paint composition comprises, calculated from the dry matter of the composition,
- 10 to 25 % by weight of a binder:
- 30 to 70 % by weight of a filler;
- 1 to 10 % by weight of an optical pigment;
- optionally 1 to 10 % by weight of paint additives and adjuvants; and
- 1 to 10 % by weight of precipitated calcium carbonate particles having an average particle size of 30 to 60 nm,
said composition optionally having a Brookfield viscosity (100 rpm) of 1000-6000 cP.

15. A paint composition, comprising filler and binder particles, and optical pigments, wherein the binder particles are formed of a resin selected from the group of alkyd, acrylic, styrene acrylic, vinyl-acryl, vinyl acetate ethylene resins, polyesters, polyurethanes, epoxy resins, melamine resins, silanes or siloxanes, and wherein 1 - 10 wt-% of the dry matter of the particles are precipitated calcium carbonate, having a size range of 30 to 60 nm, as assessed and determined from SEM images, and the pigment volume concentration is above the critical pigment volume concentration.

16. A surface of a paint layer formed by a hardened mixture of a binder and filler particles, said binder being a resin selected from the group of alkyd, acrylic, styrene acrylic, vinyl-acryl, vinyl acetate ethylene resins, polyesters, polyurethanes, epoxy resins, melamine resins, silanes or siloxanes, and said fillers being spaced apart and the spaces between the filler particles defining the surface of the layer being filled with particles of precipitated calcium carbonate having a particle size in the range of 30 to 60 nm, as assessed and determined from SEM images, wherein said precipitated calcium carbonate particles are incorporated in an amount of 0.5 to 10 % by weight of the dry matter of the composition.

17. The surface according to claim 16, wherein said layer is formed from a composition according to any of claims 11 to 14.

18. The surface according to claim 16 or 17, wherein the surface has a stain resistance ΔL*D65 on the Gilsonite test which is at least 5 % better than that of a corresponding composition having the same weight content of filler but not containing particles of calcium carbonate having a particle size in the range of 30 to 60 nm.

## Patentansprüche

1. Verfahren zum Erhöhen einer Fleckenbeständigkeit einer Oberfläche einer Schicht, die durch eine Lackzusammensetzung gebildet wird, die ein Bindemittel und Füllstoffpartikel umfasst, wobei die Füllstoffpartikel in der Schicht voneinander beabstandet sind, wobei Partikel aus gefälltem Calciumcarbonat, die eine Partikelgröße im Bereich von 30 bis 60 nm aufweisen, wie anhand von SEM-Bildern beurteilt und bestimmt, in einer ausreichenden Menge in die Zusammensetzung eingearbeitet werden, bevor die Zusammensetzung zu der Schicht gebildet wird, um mindestens einen Teil der Räume zwischen den Füllstoffpartikeln der Oberfläche zu füllen, wobei die gefällten Calciumcarbonatpartikel in einer Menge von 0,5 bis 10 Gew.-% der Trockenmasse der Zusammensetzung eingearbeitet werden.

2. Verfahren nach Anspruch 1, wobei die gefällten Calciumcarbonatpartikel in einer Menge eingearbeitet werden, die ausreicht, um mindestens 10 Vol.-%, insbesondere 20 bis 90 Vol.-%, beispielsweise 25 bis 80 Vol.-% der Räume zwischen den Füllstoffpartikeln zu füllen.

3. Verfahren nach einem der vorstehenden Ansprüche, wobei die gefällten Calciumcarbonatpartikel in einer Menge von 0,75 bis 7,5 Gew.-%, bevorzugt 1 bis 7 Gew.-%, beispielsweise 2 bis 6 Gew.-% der Trockenmasse der Zusammensetzung eingearbeitet werden.

4. Verfahren nach einem der vorstehenden Ansprüche, wobei die Lackzusammensetzung Füllstoffpartikel in einer Konzentration enthält, die die kritische Pigmentvolumenkonzentration übersteigt, wobei die Konzentration der Füllstoffpartikel insbesondere die kritische Pigmentvolumenkonzentration um mindestens 5 %, insbesondere mindestens 10 % übersteigt.

5. Verfahren nach einem der vorstehenden Ansprüche, wobei die Lackzusammensetzung Füllstoffpartikel in einer Konzentration von mindestens 50 Gew.-%, insbesondere mindestens 60 Gew.-%, zum Beispiel mehr als 70 Gew.-%, der Trockenmasse der Zusammensetzung enthält und der Füllstoff einen durchschnittlichen Partikelgrößendurchmesser im Bereich von 1 bis 10 µm aufweist.

6. Verfahren nach einem der vorstehenden Ansprüche, wobei die Lackzusammensetzung durch Zusammenmischen von 10 bis 25 Gewichtsteilen eines Bindemittels, 30 bis 70 Gewichtsteilen eines Füllstoffs, 1 bis 20 Gewichtsteilen eines Pigments, optional 1 bis 10 Gewichtsteilen Lackzusätzen und -hilfsstoffen und 1 bis 10 Gewichtsteilen gefällten Calciumcarbonatpartikeln, die eine durchschnittliche Partikelgröße von 30 bis 60 nm aufweisen, erhalten wird.

7. Verfahren nach einem der vorstehenden Ansprüche, wobei das Bindemittel ein natürliches oder synthetisches Polymer ist, insbesondere ein Harz ausgewählt aus der Gruppe von Alkyd-, Acryl-, Styrol-Acryl-, Vinyl-Acryl-, Vinylacetat-Ethylen-Harzen, Polyestern, Polyurethanen, Epoxidharzen, Melaminharzen, Silanen oder Siloxanen.

8. Verfahren nach einem der vorstehenden Ansprüche, wobei das Pigment oder der Füllstoff aus der Gruppe von Titanoxid, Talk, gemahlenem oder gefälltem Calciumcarbonat, Kaolin, Dolomit, Silikat, Calciumsulfat und Bariumsulfat und Kombinationen davon ausgewählt ist.

9. Verfahren nach einem der vorstehenden Ansprüche, wobei die Lackzusammensetzung ein Celluloseverdickungsmittel, ein pH-Reglermittel, ein Benetzungsmittel, ein Dispergiermittel, einen Entschäumer, ein Koaleszenzmittel, Schimmelschutzmittel, Konservierungsmittel, Hydrophobierungsmittel und Rheologiemodifikatoren enthält.

10. Verfahren nach einem der vorstehenden Ansprüche, wobei die Oberfläche der Schicht eine Fleckenbeständigkeit ΔL*D65 beim Gilsonite-Test aufweist, die mindestens 5 % besser als die einer entsprechenden Zusammensetzung mit gleichem Gewichtsgehalt an Füllstoff ist, die jedoch keine Calciumcarbonatpartikel, die eine Partikelgröße im Bereich von 30 bis 60 nm aufweisen, enthält.

11. Eine Oberflächenschicht bildende Lackzusammensetzung, die eine Mischung aus einem Bindemittel und Füllstoffpartikeln umfasst, wobei die Zusammensetzung in der Lage ist, eine Schicht mit einer Oberfläche zu bilden, die durch voneinander beabstandete Füllstoffe definiert ist, wobei das Bindemittel ein Harz ist, das aus der Gruppe von Alkyd-, Acryl-, Styrol-Acryl-, Vinyl-Acryl-, Vinylacetat-Ethylen-Harzen, Polyestern, Polyurethanen, Epoxidharzen, Melaminharzen, Silanen oder Siloxanen ausgewählt ist, und wobei die Zusammensetzung weiter Partikel aus gefälltem Calciumcarbonat, die eine Partikelgröße im Bereich von 30 bis 60 nm aufweisen, in einer ausreichenden Menge enthält, wie anhand von SEM-Bildern beurteilt und bestimmt, um mindestens einen Teil der Räume zwischen den Füllstoffpartikeln der Oberfläche zu füllen, wobei die gefällten Calciumcarbonatpartikel in einer Menge von 0,5 bis 10 Gew.-% der Trockenmasse der Zusammensetzung eingearbeitet sind.

12. Zusammensetzung nach Anspruch 11, umfassend die gefällten Calciumcarbonatpartikel in einer Menge von 0,75 bis 7,5 Gew.-%, bevorzugt 1 bis 7 Gew.-%, beispielsweise 2 bis 6 Gew.-% der Trockenmasse der Zusammensetzung.

13. Zusammensetzung nach Anspruch 11 oder 12, wobei die Lackzusammensetzung Füllstoffpartikel
- in einer Konzentration von mindestens 50 Gew.-%, insbesondere mindestens 60 Gew.-%, zum Beispiel mehr als 70 Gew.-% der Trockenmasse der Zusammensetzung enthält,
- die Konzentration der Füllstoffpartikel die kritische Pigmentvolumenkonzentration mit mindestens 5 % übersteigt, insbesondere die Pigmentvolumenkonzentration in Prozent größer als 70 % ist.

14. Zusammensetzung nach Anspruch 11 bis 13, wobei die Lackzusammensetzung, berechnet aus der Trockenmasse der Zusammensetzung, umfasst:
- 10 bis 25 Gew.-% eines Bindemittels:
- 30 bis 70 Gew.-% eines Füllstoffs;
- 1 bis 10 Gew.-% eines optischen Pigments;
- optional 1 bis 10 Gew.-% an Lackzusätzen und -hilfsstoffen; und
- 1 bis 10 % Gewichtsanteil gefällter Calciumcarbonatpartikel, die eine durchschnittliche Partikelgröße von 30 bis 60 nm aufweisen,
wobei die Zusammensetzung optional eine Brookfield-Viskosität (100 U/min) von 1000-6000 cP aufweist.

15. Lackzusammensetzung, die Füllstoff- und Bindemittelpartikel sowie optische Pigmente umfasst, wobei die Bindemittelpartikel aus einem Harz bestehen, das aus der Gruppe von Alkyd-, Acryl-, Styrol-Acryl-, Vinyl-Acryl-, Vinylacetat-Ethylen-Harzen, Polyestern, Polyurethanen, Epoxidharzen, Melaminharzen, Silanen oder Siloxanen ausgewählt ist und wobei 1-10 Gew.-% der Trockenmasse der Partikel ausgefälltes Calciumcarbonat mit einem Größenbereich von 30 bis 60 nm sind, wie anhand von SEM-Bildern beurteilt und bestimmt, und die Pigmentvolumenkonzentration über der kritischen Pigmentvolumenkonzentration liegt.

16. Oberfläche einer Lackschicht, die aus einer gehärteten Mischung eines Bindemittels und Füllstoffpartikeln gebildet ist, wobei das Bindemittel ein Harz ist, das aus der Gruppe von Alkyd-, Acryl-, Styrol-Acryl-, Vinyl-Acryl-, Vinylacetat-Ethylen-Harzen, Polyestern, Polyurethanen, Epoxidharzen, Melaminharzen, Silanen oder Siloxanen ausgewählt ist, und wobei die Füllstoffe voneinander beabstandet sind und die Zwischenräume zwischen den Füllstoffpartikeln, die die Oberfläche der Schicht definieren, mit Partikeln aus gefälltem Calciumcarbonat gefüllt sind, die eine Partikelgröße im Bereich von 30 bis 60 nm aufweisen, wie anhand von SEM-Bildern beurteilt und bestimmt, wobei die gefällten Calciumcarbonatpartikel in einer Menge von 0,5 bis 10 Gew.-% der Trockenmasse der Zusammensetzung eingearbeitet sind.

17. Oberfläche nach Anspruch 16, wobei die Schicht aus einer Zusammensetzung nach einem der Ansprüche 11 bis 14 gebildet ist.

18. Oberfläche nach Anspruch 16 oder 17, wobei die Oberfläche eine Fleckenbeständigkeit ΔL*D65 beim Gilsonite-Test aufweist, die mindestens 5 % besser als die einer entsprechenden Zusammensetzung mit gleichem Gewichtsgehalt an Füllstoff ist, die jedoch keine Calciumcarbonatpartikel, die eine Partikelgröße im Bereich von 30 bis 60 nm aufweisen, in einer ausreichenden Menge enthält.

## Revendications

1. Procédé d'augmentation de la résistance aux taches d'une surface d'une couche formée par une composition de peinture comprenant un liant et des particules de charge, lesdites particules de charge étant espacées dans la couche, dans lequel des particules de carbonate de calcium précipité présentant une taille de particule dans la plage de 30 à 60 nm, telle qu'évaluée et déterminée à partir d'images SEM, sont incorporées dans la composition, avant que la composition ne soit formée dans la couche, en une quantité suffisante pour remplir au moins une partie des espaces entre les particules de charge de la surface, dans lequel lesdites particules de carbonate de calcium précipité sont incorporées en une quantité de 0,5 à 10 % en poids de la matière sèche de la composition.

2. Procédé selon la revendication 1, dans lequel lesdites particules de carbonate de calcium précipité sont incorporées en une quantité suffisante pour remplir au moins 10 %, en particulier 20 à 90 %, par exemple 25 à 80 %, en volume des espaces entre les particules de charge.

3. Procédé selon l'une quelconque des revendications précédentes, dans lequel lesdites particules de carbonate de calcium précipité sont incorporées en une quantité de 0,75 à 7,5 %, de préférence 1 à 7 %, par exemple 2 à 6 %, en poids de la matière sèche de la composition.

4. Procédé selon l'une quelconque des revendications précédentes, dans lequel la composition de peinture contient des particules de charge à une concentration dépassant la concentration pigmentaire volumique critique, en particulier la concentration de particules de charge dépasse la concentration pigmentaire volumique critique d'au moins 5 %, en particulier d'au moins 10 %.

5. Procédé selon l'une quelconque des revendications précédentes, dans lequel la composition de peinture contient des particules de charge à une concentration d'au moins 50 %, en particulier d'au moins 60 %, par exemple de plus de 70 %, en poids de la matière sèche de la composition, et la charge présente un diamètre de particule moyen dans la plage de 1 à 10 µm.

6. Procédé selon l'une quelconque des revendications précédentes, dans lequel la composition de peinture est obtenue en mélangeant 10 à 25 parties en poids d'un liant, 30 à 70 parties en poids d'une charge, 1 à 20 parties en poids d'un pigment, facultativement 1 à 10 parties en poids d'additifs et d'adjuvants de peinture et 1 à 10 parties en poids de particules de carbonate de calcium précipité présentant une taille de particule moyenne de 30 à 60 nm.

7. Procédé selon l'une quelconque des revendications précédentes, dans lequel le liant est un polymère naturel ou synthétique, en particulier une résine choisie dans le groupe des résines alkydes, acryliques, styrène-acryliques, vinyl-acryliques, d'éthylène-acétate de vinyle, des polyesters, des polyuréthanes, des résines époxy, des résines mélaminiques, des silanes ou des siloxanes.

8. Procédé selon l'une quelconque des revendications précédentes, dans lequel le pigment ou la charge est choisi dans le groupe consistant en l'oxyde de titane, le talc, le carbonate de calcium broyé ou précipité, le kaolin, la dolomite, le silicate, le sulfate de calcium et le sulfate de baryum et des combinaisons de ceux-ci.

9. Procédé selon l'une quelconque des revendications précédentes, dans lequel la composition de peinture contient un épaississant cellulosique, un agent de régulation du pH, un agent mouillant, un agent dispersant, un antimousse, un agent coalescent, des agents de protection contre les moisissures, des conservateurs, des agents hydrophobes et des modificateurs de rhéologie.

10. Procédé selon l'une quelconque des revendications précédentes, dans lequel la surface de la couche présente une résistance aux taches ΔL*D65 selon le test Gilsonite qui est au moins 5 % meilleure que celle d'une composition correspondante présentant la même teneur massique en charge mais ne contenant pas de particules de carbonate de calcium présentant une taille de particule dans la plage de 30 à 60 nm.

11. Composition de peinture formant une couche de surface comprenant un mélange d'un liant et de particules de charge, ladite composition étant apte à former une couche avec une surface définie par des charges qui sont espacées, dans laquelle le liant est une résine choisie dans le groupe des résines alkydes, acryliques, styrène-acryliques, vinyl-acryliques, d'éthylène-acétate de vinyle, des polyesters, des polyuréthanes, des résines époxy, des résines mélaminiques, des silanes ou des siloxanes, et dans laquelle la composition contient en outre des particules de carbonate de calcium précipité, présentant une taille de particules dans la plage de 30 à 60 nm, telle qu'évaluée et déterminée à partir d'images SEM, en une quantité suffisante pour remplir au moins une partie des espaces entre les particules de charge de la surface, dans laquelle lesdites particules de carbonate de calcium précipité sont incorporées en une quantité de 0,5 à 10 % en poids de la matière sèche de la composition.

12. Composition selon la revendication 11, comprenant lesdites particules de carbonate de calcium précipité en une quantité de 0,75 à 7,5 %, de préférence 1 à 7 %, par exemple 2 à 6 %, en poids de la matière sèche de la composition.

13. Composition selon la revendication 11 ou 12, dans laquelle la composition de peinture contient des particules de charge
- dans une concentration d'au moins 50 %, en particulier d'au moins 60 %, par exemple de plus de 70 %, en poids de la matière sèche de la composition,
- ladite concentration de particules de charge dépassant la concentration pigmentaire volumique critique d'au moins 5 %, en particulier, le pourcentage de concentration pigmentaire volumique est supérieur à 70 %.

14. Composition selon la revendication 11 à 13, dans laquelle la composition de peinture comprend, calculés à partir de la matière sèche de la composition,
- 10 à 25 % en poids d'un liant :
- 30 à 70 % en poids d'une charge ;
- 1 à 10 % en poids d'un pigment optique ;
- facultativement 1 à 10 % en poids d'additifs et d'adjuvants de peinture ; et
- 1 à 10 % en poids de particules de carbonate de calcium précipité présentant une taille moyenne de particules de 30 à 60 nm,
ladite composition présentant facultativement une viscosité Brookfield (100 tr/min) de 1000-6000 cP.

15. Composition de peinture comprenant des particules de charge et de liant et des pigments optiques, dans laquelle les particules de liant sont formées d'une résine choisie dans le groupe des résines alkydes, acryliques, styrène-acryliques, vinyl-acryliques, d'éthylène-acétate de vinyle, des polyesters, des polyuréthanes, des résines époxy, des résines mélaminiques, des silanes ou des siloxanes, et dans laquelle 1-10 % en poids de la matière sèche des particules sont du carbonate de calcium précipité, présentant une plage de tailles de 30 à 60 nm, telle qu'évaluée et déterminée à partir d'images SEM, et la concentration pigmentaire volumique est supérieure à la concentration pigmentaire volumique critique.

16. Surface d'une couche de peinture formée par un mélange durci d'un liant et de particules de charge, ledit liant étant une résine choisie dans le groupe des résines alkydes, acryliques, styrène-acryliques, vinyl-acryliques, d'éthylène-acétate de vinyle, des polyesters, des polyuréthanes, des résines époxy, des résines mélaminiques, des silanes ou des siloxanes, et lesdites charges étant espacées et les espaces entre les particules de charge définissant la surface de la couche étant remplis de particules de carbonate de calcium précipité présentant une taille de particule dans la plage de 30 à 60 nm, telle qu'évaluée et déterminée à partir d'images SEM, lesdites particules de carbonate de calcium précipité étant incorporées en une quantité de 0,5 à 10 % en poids de la matière sèche de la composition.

17. Surface selon la revendication 16, dans laquelle ladite couche est formée à partir d'une composition selon l'une quelconque des revendications 11 à 14.

18. Surface selon la revendication 16 ou 17, dans laquelle la surface présente une résistance aux taches ΔL*D65 selon le test Gilsonite qui est au moins 5 % meilleure que celle d'une composition correspondante présentant la même teneur massique en charge mais ne contenant pas de particules de carbonate de calcium présentant une taille de particule dans la plage de 30 à 60 nm.
